# EUROPEAN PATENT SPECIFICATION

(11) **EP 4 212 279 B1**
(45) Date of publication and mention of the grant of the patent: **01.04.2026**
(21) Application number: 23150875.5
(22) Date of filing: 10.01.2023
(51) Int. Cl.: B23Q 1/52, B23Q 16/06, B23Q 16/10

(54) **WORK CENTRE TO PROCESS AND/OR CUT SECTION BARS, IN PARTICULAR MADE OF ALUMINIUM, LIGHT ALLOYS, PVC OR THE LIKE**
BEARBEITUNGSZENTRUM ZUM BEARBEITEN UND/ODER SCHNEIDEN VON PROFILSTÄBEN, INSBESONDERE AUS ALUMINIUM, LEICHTMETALLLEGIERUNGEN, PVC ODER DERGLEICHEN
CENTRE DE TRAVAIL POUR TRAITER ET/OU COUPER DES BARRES PROFILÉES, EN PARTICULIER EN ALUMINIUM, ALLIAGES LÉGERS, PVC OU SIMILAIRES

(30) Priority: 12.01.2022 IT 202200000362
(43) Date of publication of application: 19.07.2023
(73) Proprietor: F.O.M. Industrie S.r.l., 47841 Cattolica (RN) (IT)
(72) Inventor: LATTANZI, Lorenzo, 47841 Cattolica (RN) (IT)
(74) Representative: Studio Torta S.p.A.

(56) References cited:
- EP-A1- 2 204 258
- EP-A2- 1 036 629
- WO-A1-2010/133910

## Description

### TECHNICAL FIELD

This invention relates to a work centre to process and/or cut section bars, in particular made of aluminium, light alloys, PVC or the like.

### BACKGROUND

In the section bar processing sector, it is known to provide a work centre of the type comprising an elongated base extending in a first substantially horizontal direction; and a holding unit mounted on the base to receive and hold at least one section bar.

Generally, the holding unit comprises a plurality of holding devices, which are distributed along the base in the first direction, extend in a second, horizontal direction that is transverse to the first direction and comprise, each of them, a corresponding pair of clamping jaws.

The work centre comprises, in addition, an overhead crane, which is mobile along the base in the first direction, extends above the base in the second direction, and supports an operating unit for processing and/or cutting section bars.

The operating unit normally comprises a first slide that is mobile along the overhead crane in the second direction, and a second slide that is mobile along the first slide in a third direction that is orthogonal to the above-mentioned first and second directions.

The operating unit is also provided with an electric spindle, which is mounted on the second slide to rotate, in relation to the second slide, around a first rotation axis substantially parallel to the first direction, and is provided with a tool-carrier spindle mounted so as to rotate around a second rotation axis that is transverse to the first rotation axis.

The electric spindle is moved around the first rotation axis between two operating positions by a pneumatic actuator cylinder, and is locked in the two operating positions by a locking device.

The known work centres to process and/or cut section bars of the type described above have some drawbacks, mainly deriving from the fact that the pneumatic actuator cylinder only makes it possible to move the electric spindle in two operating positions around the first rotation axis and that, as a result, the operating unit has relatively reduced flexibility and versatility.

EP 1 036 629 A2 discloses a work centre according to the preamble of claim 1.

### SUMMARY

The object of this invention is to provide a work centre to process and/or cut section bars, in particular made of aluminium, light alloys, PVC or the like, which is free from the drawbacks described above and that is simple and cost-effective to implement.

According to this invention, a work centre to process and/or cut section bars, in particular made of aluminium, light alloys, PVC or the like, is provided, as claimed in the attached claims.

### BRIEF DESCRIPTION OF THE DRAWINGS

This invention will now be described with reference to the attached drawings that illustrate a non-limiting embodiment thereof, in which:
Figure 1 is a schematic perspective view, with parts removed for clarity, of a preferred embodiment of the work centre of this invention;
Figure 2 is a schematic side view, with parts in cross-section and parts removed for clarity, of a detail of the work centre in Figure 1;
Figure 3 is a schematic perspective view, with parts removed for clarity, of a detail in Figure 2; and
Figure 4 is a schematic perspective view, with parts removed for clarity, of a detail in Figure 3.

### DESCRIPTION OF EMBODIMENTS

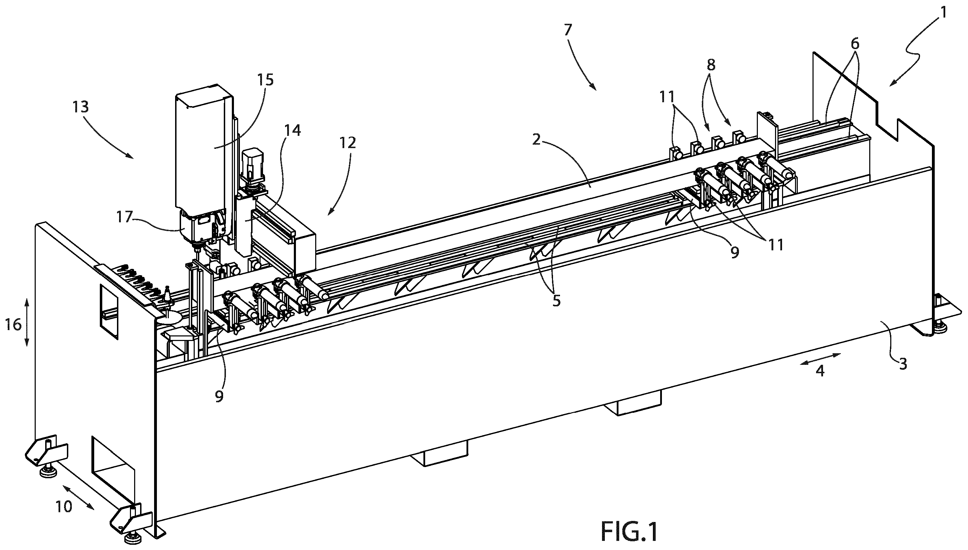

With reference to Figure 1, the reference number 1 indicates, as a whole, a work centre to process and/or cut section bars 2 made of aluminium, light alloys, PVC or the like having an elongated shape.

The work centre 1 comprises an elongated base 3, which extends in a horizontal direction 4, is provided with a first pair of longitudinal, guiding side members 5 that are parallel to each other and to the direction 4, and is provided, in addition, with a second pair of longitudinal, guiding side members 6 that are parallel to each other and to the direction 4.

The base 3 supports a holding unit 7 comprising a plurality of holding devices 8 distributed along the base 3 in the direction 4.

Each device 8 comprises a slide 9, which extends in a horizontal direction 10 that is transverse to the direction 4, and is slidably coupled with the side members 5 to make straight movements along the base 3 in the direction 4 during an equipping step of the work centre 1.

Each slide 9 supports two jaws 11 that move relative to each other in the direction 10 between a clamping position and a releasing position for at least one section bar **2.**

The base 3 supports, in addition, an overhead crane 12, which is slidably coupled to the side members 6 to make straight movements along the base 3 in the direction 4, and extends above the base 3 in the direction 10.

The overhead crane 12 is provided with an operating unit 13 comprising a horizontal slide 14 that is mobile along the overhead crane 12 in the direction 10, and a vertical slide 15 slidably coupled to the slide 14 to make straight movements in a vertical direction 16 that is orthogonal to the directions 4 and 10.

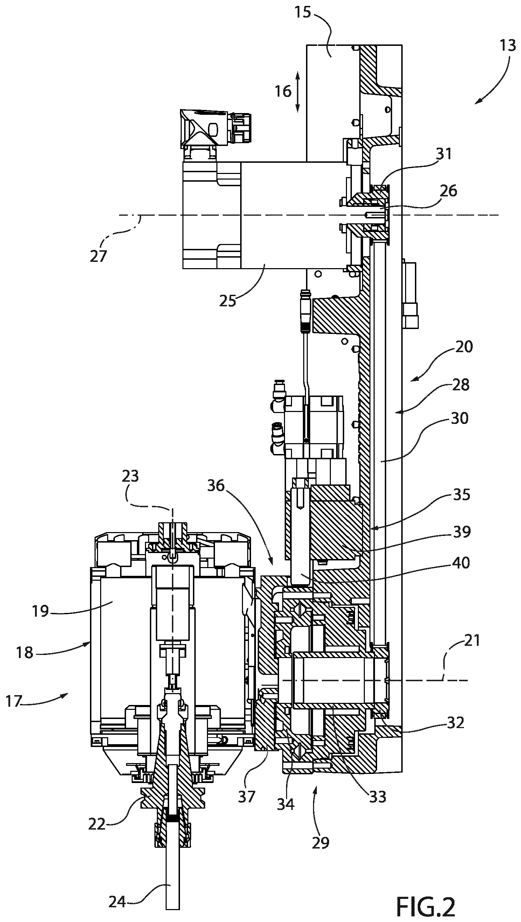

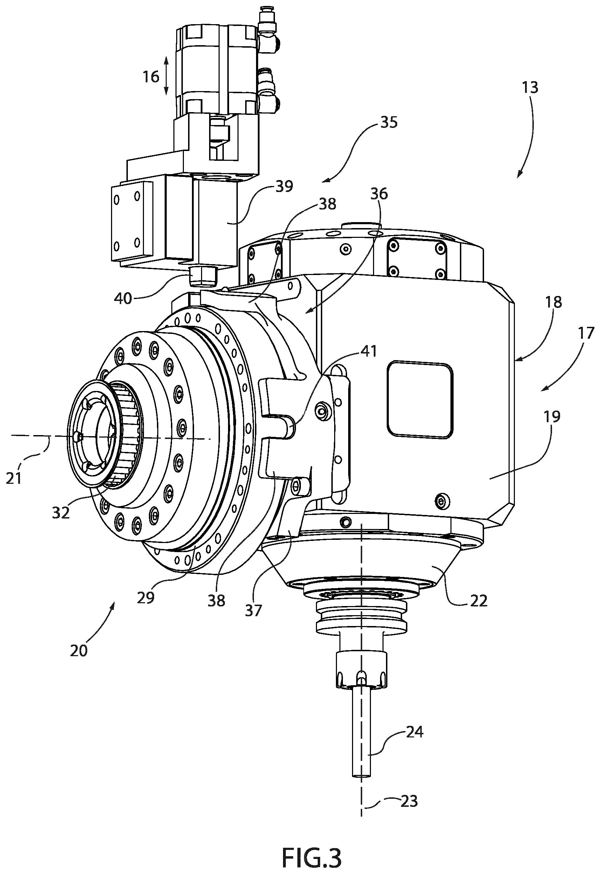

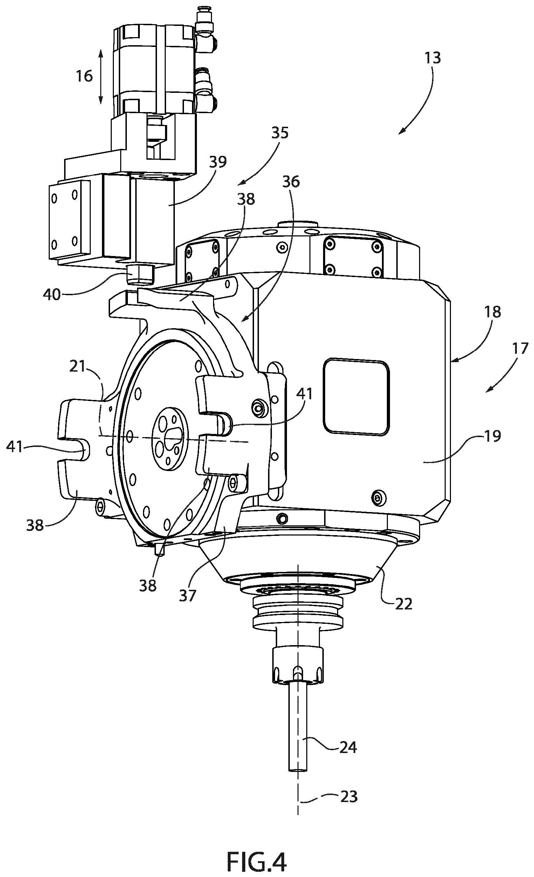

According to what is illustrated in Figures 2, 3, and 4, the slide 15 supports an electric spindle 17 comprising a containing casing 18, which has a substantially parallelepiped-like shape, is delimited, externally, by a side surface 19, and is coupled in a rotary manner to the slide 15 to rotate, in relation to the slide 15 and under the thrust of a driving device 20, around a rotation axis 21 that is substantially parallel to the direction **4.**

The electric spindle 17 also comprises a tool-carrier spindle 22, which is engaged in a rotary manner through the casing 18 to rotate around a rotation axis 23 that is transverse to the axis 21, and carries, engaged, a tool 24 of a known type for processing and/or cutting section bars 2.

The orientation of the axis 23 of course depends on the position of the electric spindle 17 around the axis 21.

The device 20 comprises an electric motor 25, which is fixed to the slide 15, has an output shaft 26 mounted to rotate around a rotation axis 27 that is parallel to the direction 4 and to the axis 21, and is connected to the electric spindle 17 via the interposition of a belt transmission 28 and a reduction gear 29.

The transmission 28 comprises a belt 30 wound in a ring around a pulley 31 formed on the shaft 26 and another pulley 32, which is mounted so as to rotate around the axis 21, and is formed on an input gear 33 of the reduction gear 29.

The reduction gear 29 also comprises an output gear 34, which is coupled with the gear 33, and is also coupled in an angularly fixed manner with the casing 18 of the electric spindle 17.

The unit 13 is also provided with a locking device 35 to lock the electric spindle 17 in at least one operating position (in this case, three operating positions) around the axis 21.

The device 35 has a cup 36 comprising a coupling plate 37, which is mounted between the casing 18 and the reduction gear 29 perpendicularly to the axis 21, is fixed to the casing 18 and to the reduction gear 29, and is axially aligned with the gear 34.

The cup 36 also comprises a plurality of appendages 38 (in this case, three appendages 38), which are distributed around the axis 21 at angles that are 90° from each other, project from the plate 37 parallel to the axis 21 and above the reduction gear 29, in particular above the gear 34, and have, in this case, the shape of a fork.

The device 35 also comprises an actuator cylinder 39, which is fixed to the slide 15 parallel to the direction 16, and has an output rod defining a locking pin 40 that is mobile in the direction 16 between a locking position, wherein the pin 40 engages a seat 41 made through each appendage 38, and a release position.

In use, once the electric spindle 17 is moved around the axis 21, the cylinder 39 is activated to move the pin 40 into its locking position and to engage the seat 41 of an appendage 38.

According to some variants not illustrated, the appendages 38 are of course eliminated and replaced, for example, with cylindrical sectors provided with at least two seats 41, or with an annular flange provided with a plurality of seats 41.

The operating unit 13 has some advantages, mainly deriving from the fact that the driving device 20 and, thus, the electric motor 25 enable the movement of the electric spindle 17 in a plurality of operating positions around the axis 21 and that the locking device 35 ensures the correct operating position of the electric spindle 17 around the axis 21, irrespective of the elasticity of the belt transmission 28 and the plays and construction tolerances of the reduction gear 29.

## Claims

1. A work centre to process and/or cut section bars (2), in particular made of aluminium, light alloys, PVC or the like, comprising a holding unit (7) to hold at least one section bar (2); and an operating unit (13) to process and/or cut the section bar (2); the operating unit (13) comprising, in turn, an electric spindle (17) mounted so as to rotate around a first rotation axis (21) and provided with a tool-carrier spindle (22) mounted so as to rotate around a second rotation axis (23) transverse to the first rotation axis (21), a driving device (20) to move the electric spindle (17) around the first rotation axis (21), and a locking device (35) to lock the electric spindle (17) in at least one operating position around the first rotation axis (21); wherein the driving device (20) comprises an electric motor (25) and a belt transmission (28) interposed between the electric motor (25) and the electric spindle (17); and **characterized in that** the locking device (35) comprises at least one recess (41) obtained on the electric spindle (17) and at least one pin element (40) movable between a locking position, in which the pin element (40) engages the recess (41), and a release position, in which the pin element (40) disengages the recess (41).

2. The work centre according to claim 1, wherein the electric spindle (17) comprises a containing casing (18), which extends around the second rotation axis (23), is externally delimited by a side surface (19) and is engaged by the tool-carrier spindle (22) in a rotary manner.

3. The work centre according to claim 2, wherein the locking device (35) comprises a cup (36) provided with a coupling plate (37) fixed to the side surface (19) of the containing casing (18) perpendicularly to the first rotation axis (21) and with at least one appendage (38), which projects from the coupling plate (37) parallel to the first rotation axis (21) and has at least one recess (41).

4. The work centre according to claim 3, wherein the cup (36) has at least two appendages (38) distributed around the first rotation axis (21) and each provided with at least one respective recess (41).

5. The work centre according to claim 3 or 4, wherein the locking device (35) further comprises a pin element (40), which extends crosswise to the first rotation axis (21) and is movable between a locking position, in which the pin element (40) engages the recess (41) of an appendage (38), and a release position, in which the pin element (40) disengages the recess (41).

6. The work centre according to any one of the claims from 3 to 5, wherein the driving device (20) comprises a reduction gear (29) interposed between the belt transmission (28) and the electric spindle (17).

7. The work centre according to claim 6, wherein the coupling plate (37) is aligned with the reduction gear (29) along the first rotation axis (21) and wherein each appendage (38) projects from the coupling plate (37) above the reduction gear (29).

8. The work centre according to any one of the preceding claims and further comprising an elongated base (3), which extends in a first direction (4), in particular parallel to the first rotation axis (21), and supports the holding unit (7), and an overhead crane (12), which is movable along the base (3) in the first direction (4) and extends above the base (3) in a second direction (10) transverse to the first direction (4).

9. The work centre according to claim 8, wherein the operating unit (13) further comprises a first slide (14) movable along the overhead crane (12) in the second direction (10) and a second slide (15) movable along the first slide (14) in a third direction (16) orthogonal to the said first and second directions (4, 10); the electric spindle (17) being mounted on the second slide (15) so as to rotate around the first rotation axis (21).

## Patentansprüche

1. Bearbeitungszentrum zum Bearbeiten und/oder Schneiden von Profilstäben (2), insbesondere aus Aluminium, Leichtmetall, PVC oder dergleichen, mit einer Halteeinheit (7) zum Halten mindestens eines Profilstabes (2); und einer Bedieneinheit (13) zum Bearbeiten und/oder Schneiden des Profilstabes (2); wobei die Bedieneinheit (13) wiederum eine elektrische Spindel (17), die so gelagert ist, dass sie sich um eine erste Drehachse (21) dreht, und mit einer Werkzeugträgerspindel (22) versehen ist, die so gelagert ist, dass sie sich um eine zweite Drehachse (23) quer zur ersten Drehachse (21) dreht, eine Antriebsvorrichtung (20) zum Bewegen der elektrischen Spindel (17) um die erste Drehachse (21) und eine Verriegelungsvorrichtung (35) zum Verriegeln der elektrischen Spindel (17) in mindestens einer Betriebsposition um die erste Drehachse (21) umfasst; wobei die Antriebsvorrichtung (20) einen Elektromotor (25) und ein zwischen dem Elektromotor (25) und der elektrischen Spindel (17) eingefügtes Riemengetriebe (28) umfasst; und **dadurch gekennzeichnet, dass** die Verriegelungsvorrichtung (35) mindestens eine an der elektrischen Spindel (17) ausgebildete Ausnehmung (41) und mindestens ein Stiftelement (40) umfasst, das zwischen einer Verriegelungsposition, in der das Stiftelement (40) in die Ausnehmung (41) eingreift, und einer Freigabeposition, in der das Stiftelement (40) außer Eingriff mit der Ausnehmung (41) gelangt, bewegbar ist.

2. Bearbeitungszentrum nach Anspruch 1, wobei die elektrische Spindel (17) ein sich um die zweite Drehachse (23) erstreckendes, nach außen durch eine Seitenfläche (19) begrenztes umschließendes Gehäuse (18) umfasst und von der Werkzeugträgerspindel (22) drehbar in Eingriff genommen wird.

3. Bearbeitungszentrum nach Anspruch 2, wobei die Verriegelungsvorrichtung (35) einen Becher (36) umfasst, der mit einer Kupplungsplatte (37), die senkrecht zur ersten Drehachse (21) an der Seitenfläche (19) des umschließenden Gehäuses (18) befestigt ist und mit mindestens einem Fortsatz (38) versehen ist, der parallel zur ersten Drehachse (21) von der Kupplungsplatte (37) absteht und mindestens eine Ausnehmung (41) aufweist.

4. Bearbeitungszentrum nach Anspruch 3, wobei der Becher (36) mindestens zwei um die erste Drehachse (21) verteilte Fortsätze (38) aufweist, die jeweils mit mindestens einer jeweiligen Ausnehmung (41) versehen sind.

5. Bearbeitungszentrum nach Anspruch 3 oder 4, wobei die Verriegelungsvorrichtung (35) ferner ein Stiftelement (40) umfasst, das sich quer zur ersten Drehachse (21) erstreckt und zwischen einer Verriegelungsposition, in der das Stiftelement (40) in die Ausnehmung (41) eines Fortsatzes (38) eingreift, und einer Freigabeposition, in der das Stiftelement (40) außer Eingriff mit der Ausnehmung (41) gelangt, bewegbar ist.

6. Bearbeitungszentrum nach einem der Ansprüche 3 bis 5, wobei die Antriebsvorrichtung (20) ein Untersetzungsgetriebe (29) umfasst, das zwischen dem Riemengetriebe (28) und der elektrischen Spindel (17) eingefügt ist.

7. Bearbeitungszentrum nach Anspruch 6, wobei die Kupplungsplatte (37) mit dem Untersetzungsgetriebe (29) entlang der ersten Drehachse (21) ausgerichtet ist und wobei jeder Fortsatz (38) von der Kupplungsplatte (37) über das Untersetzungsgetriebe (29) absteht.

8. Bearbeitungszentrum nach einem der vorhergehenden Ansprüche, ferner umfassend einen langgestreckten Sockel (3), der sich in einer ersten Richtung (4), insbesondere parallel zur ersten Drehachse (21) erstreckt und die Halteeinheit (7) trägt, und einen Laufkran (12), der entlang des Sockels (3) in der ersten Richtung (4) bewegbar ist und sich oberhalb des Sockels (3) in einer zweiten Richtung (10) quer zur ersten Richtung (4) erstreckt.

9. Bearbeitungszentrum nach Anspruch 8, wobei die Bedieneinheit (13) ferner einen ersten Schlitten (14), der entlang des Laufkrans (12) in der zweiten Richtung (10) bewegbar ist, und einen zweiten Schlitten (15) umfasst, der entlang des ersten Schlittens (14) in einer dritten Richtung (16) senkrecht zur ersten und zweiten Richtung (4, 10) bewegbar ist; wobei die elektrische Spindel (17) an dem zweiten Schlitten (15) so gelagert ist, dass sie sich um die erste Drehachse (21) dreht.

## Revendications

1. Centre d'usinage pour traiter et/ou couper des profilés (2), en particulier en aluminium, en alliages légers, en PVC ou similaires, comprenant une unité de maintien (7) pour maintenir au moins un profilé (2) ; et une unité de commande (13) pour traiter et/ou couper le profilé (2) ; l'unité de commande (13) comprenant, à son tour, une broche électrique (17) montée de manière à tourner autour d'un premier axe de rotation (21) et munie d'une broche porte-outil (22) montée de manière à tourner autour d'une seconde rotation (23) transversale au premier axe de rotation (21), un dispositif d'entraînement (20) pour déplacer la broche électrique (17) autour du premier axe de rotation (21), et un dispositif de verrouillage (35) pour verrouiller la broche électrique (17) dans au moins une position de fonctionnement autour du premier axe de rotation (21) ; dans lequel le dispositif d'entraînement (20) comprend un moteur électrique (25) et une transmission à courroie (28) interposée entre le moteur électrique (25) et la broche électrique (17) ; et **caractérisé en ce que** le dispositif de verrouillage (35) comprend au moins un évidement (41) obtenu sur la broche électrique (17) et au moins un élément de cheville (40) mobile entre une position de verrouillage, dans laquelle l'élément de cheville (40) s'engage dans l'évidement (41), et une position de libération, dans laquelle l'élément de cheville (40) se dégage de l'évidement (41).

2. Centre d'usinage selon la revendication 1, dans lequel la broche électrique (17) comprend un boîtier de confinement (18), qui s'étend autour du second axe de rotation (23), est délimité extérieurement par une surface latérale (19) et est engagé par la broche porte-outil (22) de manière rotative.

3. Centre d'usinage selon la revendication 2, dans lequel le dispositif de verrouillage (35) comprend une coupelle (36) munie d'une plaque d'accouplement (37) fixée à la surface latérale (19) du boîtier de confinement (18) perpendiculairement au premier axe de rotation (21) et d'au moins un appendice (38), qui fait saillie de la plaque d'accouplement (37) parallèlement au premier axe de rotation (21) et comporte au moins un évidement (41).

4. Centre d'usinage selon la revendication 3, dans lequel la coupelle (36) comporte au moins deux appendices (38) répartis autour du premier axe de rotation (21) et pourvus chacun d'au moins un évidement respectif (41).

5. Centre d'usinage selon la revendication 3 ou 4, dans lequel le dispositif de verrouillage (35) comprend en outre un élément de cheville (40), qui s'étend transversalement au premier axe de rotation (21) et est mobile entre une position de verrouillage, dans laquelle l'élément de cheville (40) s'engage dans l'évidement (41) d'un appendice (38), et une position de libération, dans laquelle l'élément de cheville (40) se dégage de l'évidement (41).

6. Centre d'usinage selon l'une quelconque des revendications 3 à 5, dans lequel le dispositif d'entraînement (20) comprend un engrenage réducteur (29) interposé entre la transmission à courroie (28) et la broche électrique (17).

7. Centre d'usinage selon la revendication 6, dans lequel la plaque d'accouplement (37) est alignée avec l'engrenage réducteur (29) le long du premier axe de rotation (21) et dans lequel chaque appendice (38) fait saillie de la plaque d'accouplement (37) au-dessus de l'engrenage réducteur (29).

8. Centre d'usinage selon l'une quelconque des revendications précédentes et comprenant en outre une base allongée (3), qui s'étend dans une première direction (4), en particulier parallèlement au premier axe de rotation (21), et supporte l'unité de maintien (7), et un pont roulant (12), qui est mobile le long de la base (3) dans la première direction (4) et s'étend au-dessus de la base (3) dans une seconde direction (10) transversale à la première direction (4).

9. Centre d'usinage selon la revendication 8, dans lequel l'unité de commande (13) comprend en outre un premier coulisseau (14) mobile le long du pont roulant (12) dans la deuxième direction (10) et un deuxième coulisseau (15) mobile le long du premier coulisseau (14) dans une troisième direction (16) orthogonale auxdites première et deuxième directions (4, 10) ; la broche électrique (17) étant montée sur le deuxième coulisseau (15) de manière à tourner autour du premier axe de rotation (21).
